# EUROPEAN PATENT APPLICATION

(11) **EP 4 242 269 A1**
(43) Date of publication of application: **13.09.2023**
(21) Application number: 21894358.7
(22) Date of filing: 07.10.2021
(51) Int. Cl.: C08L 101/08, C08G 63/12, C08J 3/03, C08K 3/013, C08K 5/053, C08K 5/17, C08K 5/5415

(54) **BINDER, SOLIDIFIED OBJECT, AND METHOD FOR PRODUCING SOLIDIFIED OBJECT**

(30) Priority: 17.11.2020 JP 2020191207
(71) Applicant: Nippon Shokubai Co., Ltd., Osaka-shi, Osaka 541-0043 (JP)
(72) Inventor: TAKATA Tomonari, Suita-shi, Osaka 564-0034 (JP); KAWATA Yuichi, Suita-shi, Osaka 564-0034 (JP)
(74) Representative: Hoffmann Eitle
(86) International application number: PCT/JP2021/037227
(87) International publication number: WO 2022/107483

(57) **Abstract**

A binder comprising; a carboxyl group-containing polymer having a weight average molecular weight of 2000 to 6000 g/mol and a polyhydric alcohol, wherein a molar ratio of a carboxylic acid group of the carboxyl group-containing polymer and the polyhydric alcohol is 79 : 21 to 35 : 65, and wherein the polyhydric alcohol comprises a polyhydric alcohol having a viscosity of 900 mPa·s or less at 20 °C.

## Description

### Technical Field

The present disclosure relates to a binder, a solidified body (or object), and a method for producing a solidified body (or object).

### Background Art

A heat-resistant molded body formed into a mat shape obtained by adhering a binder to a filler such as glass fiber is widely used as a heat insulating material for houses, warehouses, apparatuses and appliances. As the binder, a phenol-formaldehyde binder is widely used. However, there is a problem that unreacted formaldehyde remains in the molded body of the phenol-formaldehyde binder and the formaldehyde is released after the construction of a dwelling house or the like. Thus, binders that do not release formaldehyde have been investigated.

For example, in Patent Documents 1 to 3, as a binder which does not release formaldehyde, a binder which is cured by a reaction between a carboxyl group-containing polymer such as a polyacrylic acid polymer and a hydroxyl group contained in itself or a polyhydric alcohol which is a crosslinking agent is proposed.

### Citation List

### Patent Literature

[Patent Document 1] Japanese Unexamined Patent Application Publication JP2016-44253A
[Patent Document 2] Japanese Unexamined Patent Application Publication JP2016-98285A
[Patent Document 3] Japanese Unexamined Patent Application Publication JPH06-184285A

### Summary of Invention

### Technical Problem

Here, as a result of intensive examination by the present inventors, it has been found that there is still room for improvement in the impregnation property of the conventional binder to a filler. By enhancing the impregnation property of the binder, it is expected that the handling property of the binder can be enhanced during the production of the heat-resistant molded body, and also that variations in the performance of the product due to insufficient impregnation can be suppressed. However, when the impregnation property of the binder is increased, the strength of the product tends to decrease. It has been difficult to increase the impregnation property of the binder while maintaining the strength of the product.

It is therefore an object of the present disclosure to provide a binder capable of achieving sufficiently high strength and having excellent impregnation properties. It is another object of the present disclosure to provide a solidified body using the binder and a method for producing the solidified body.

### Solution to Problem

A binder of the present disclosure comprises a carboxyl group-containing polymer having a weight average molecular weight of 2000 to 6000 g/mol and a polyhydric alcohol, wherein a molar ratio of a carboxylic acid group of the carboxyl group-containing polymer and the polyhydric alcohol is 79 : 21 to 35 : 65, and wherein the polyhydric alcohol comprises a polyhydric alcohol having a viscosity of 900 mPa·s or less at 20 °C.

A binder of the present disclosure comprises a carboxyl group-containing polymer having a weight average molecular weight of 2000 to 6000 g/mol and a polyhydric alcohol, wherein a molar ratio of a carboxylic acid group of the carboxyl group-containing polymer and the polyhydric alcohol is 79 : 21 to 35 : 65, and wherein the polyhydric alcohol comprises at least one compound selected from the group consisting of hydrocarbon compounds substituted with 2 to 10 hydroxyl groups and polyalkylene glycols.

The hydrocarbon compound substituted with hydroxyl groups may be at least one selected from the group consisting of ethylene glycol, propylene glycol, 1, 3-propanediol, 1, 3-butylene glycol, 1, 4-butanediol, 1, 5-pentanediol, 1, 6-hexanediol, glycerin, trimethylolpropane, trimethylolethane, erythritol, xylitol and sorbitol.

It is preferable that the carboxyl group-containing polymer comprise a phosphorus element.

It is preferable that the carboxyl group-containing polymer comprise a residue derived from an oxoacid of phosphorus.

It is preferable that the binder further comprise a polyamine.

It is preferable that the binder further comprise a silane coupling agent.

It is preferable that the binder further comprise a polyamine and a silane coupling agent.

It is preferable that the binder has a viscosity of 200 mPa·s or less at 25 °C.

The binder may be a binder for fibers.

A solidified body of the present disclosure is a product formed by solidifying a precursor comprising a filler, and a carboxyl group-containing polymer having a weight average molecular weight of 2000 to 6000 g/mol and polyhydric alcohol being in contact with the a filler, wherein a molar ratio of a carboxylic acid group contained in the carboxyl group-containing polymer and the polyhydric alcohol in the precursor is 79 : 21 to 35 : 65, and wherein the polyhydric alcohol satisfies at least one of the following conditions (1) and (2).
(1) The polyhydric alcohol comprises a polyhydric alcohol having a viscosity of 900 mPa·s or less at 20 °C.
(2) The polyhydric alcohol comprises at least one compound selected from the group consisting of hydrocarbon compounds substituted with 2 to 10 hydroxyl groups and polyalkylene glycols.

A process for producing a solidified body of the present disclosure comprises a step of obtaining a precursor by bringing a carboxyl group-containing polymer having a weight average molecular weight of 2000 to 6000 g/mol and a polyhydric alcohol into contact with a filler, wherein a molar ratio of a carboxylic acid group contained in the carboxyl group-containing polymer in the precursor to the polyhydric alcohol is 79 : 21 to 35 : 65, and a step of solidifying the precursor, wherein the polyhydric alcohol satisfies at least one of the following conditions (1) and (2).
(1) The polyhydric alcohol comprises a polyhydric alcohol having a viscosity of 900 mPa ·s or less at 20 °C.
(2) The polyhydric alcohol comprises at least one compound selected from the group consisting of hydrocarbon compounds substituted with 2 to 10 hydroxyl groups and polyalkylene glycols.

### Advantageous Effects of Invention

According to the present disclosure, it is possible to provide a binder capable of achieving sufficiently high strength and having excellent impregnation properties. According to the present disclosure, it is also possible to provide a solidified body using the binder and a method for producing the solidified body.

### Description of Embodiments

One embodiment of the present disclosure will now be described in detail, but the present disclosure is not limited thereto. In this specification, the term "(meth) acrylate" means "acrylate" or "methacrylate". The same applies to other similar expressions such as "(meth) acrylic acid".

The binder according to this embodiment comprises a carboxyl group-containing polymer having a weight average molecular weight of 2000 to 6000 g/mol (hereinafter also referred to as component (A)) and a polyhydric alcohol (hereinafter also referred to as component (B)), wherein a molar ratio between a carboxylic acid group of component (A) and component (B) is 79 : 21 to 40 : 60, and the component (B) satisfies at least one of the following conditions (1) and (2).
(1) The polyhydric alcohol has a viscosity of 900 mPa·s or less at 20 °C.
(2) The polyhydric alcohol comprises at least one compound selected from the group consisting of hydrocarbon compounds substituted with 2 to 10 hydroxyl groups and polyalkylene glycols.

By using such a binder, impregnation with a filler can be improved, and a solidified body having excellent strength can be obtained.

### <Component A: Carboxyl group-containing polymer>

The carboxyl group-containing polymer contained in the binder of the present embodiment has a weight average molecular weight (Mw) of 2000 to 6000 g/mol. By containing such a carboxyl group-containing polymer, a binder having excellent impregnation properties can be obtained. The weight average molecular weight of the carboxyl group-containing polymer is preferably 2500 to 6000 g/mol, and more preferably 3000 to 6000 g/mol.

The number average molecular weight (Mn) of the carboxyl group-containing polymer is preferably 1000 to 4000 g/mol, and more preferably 1500 to 3000 g/mol. The polydispersity (Mw/Mn) of the carboxyl group-containing polymer is preferably 1 to 3, and more preferably 1.4 to 2.5.

The weight average molecular weight and number average molecular weight of the carboxyl group-containing polymer can be measured by gel permeation chromatography (GPC) under the conditions described in the examples, for example.

The carboxyl group-containing polymer of the present embodiment preferably contains a structural unit derived from a monomer having an ethylenically unsaturated group and a carboxyl group (hereinafter, also referred to as an unsaturated carboxylic acid monomer). The unsaturated carboxylic acid monomer is not particularly limited, and examples thereof include compounds represented by the following general formula (I). In the present specification, the carboxyl group includes both a carboxylic acid group (- COOH) and a salt of the carboxylic acid group. 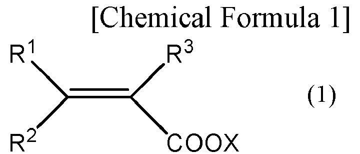 [In general formula (1), R¹, R² and R³ are the same or different and represent a hydrogen atom, a methyl group or -(CH₂)_{z}COOM¹ group, - (CH₂)_{z}COOM¹ group may form an anhydride with a -COOX group or another -(CH₂)_{z}COOM¹ group, z is an integer of 0 to 2, M¹ represents a hydrogen atom, an alkali metal, an alkaline earth metal, an ammonium ion, an organic ammonium ion or an organic amine group ; and X represents a hydrogen atom, a methyl group, an ethyl group, an alkali metal, an alkaline earth metal, an ammonium ion, an organic ammonium ion or an organic amine group.]

Examples of the unsaturated carboxylic acid monomer represented by general formula (1) include monocarboxylic acid monomers such as (meth)acrylic acid, crotonic acid and salts thereof; dicarboxylic acid monomers such as maleic acid, itaconic acid, fumaric acid and salts thereof; anhydrides of dicarboxylic acid monomers such as maleic acid, itaconic acid, fumaric acid or salts thereof and the like. Examples of salts referred to herein include alkali metal salts, alkaline earth metal salts, ammonium salts, organic ammonium salts, organic amine salts and the like. Examples of the alkali metal salts include lithium salts, sodium salts and potassium salts. Examples of the alkaline earth metal salts include calcium salts and magnesium salts. Examples of the organic ammonium salts include methyl ammonium salts, ethyl ammonium salts, dimethyl ammonium salts, diethyl ammonium salts, trimethyl ammonium salts and triethyl ammonium salts. Examples of the organic amine salts include alkanolamine salts such as ethanolamine salts, diethanolamine salts and triethanolamine salts.

The unsaturated carboxylic acid monomer represented by general formula (1) is preferably (meth)acrylic acid or a salt thereof, maleic acid or a salt thereof, or maleic anhydride, more preferably acrylic acid or a salt thereof, maleic acid or a salt thereof, and even more preferably acrylic acid, from the viewpoint of further producing the effects of the present disclosure.

The unsaturated carboxylic acid monomer may be used alone or in combination of two or more thereof.

In the binder, the carboxyl group contained in the carboxyl group-containing polymer may or may not be neutralized. Of the carboxyl groups contained in the carboxyl group-containing polymer, 80 mol% or more may be a carboxylic acid group (that is, an unneutralized COOH group), 90 mol% or more may be a carboxylic acid group, and 95 mol% or more may be a carboxylic acid group.

The neutralization of the carboxyl group-containing polymer may be performed by adding a neutralizing agent during or after the synthesis of the carboxyl group-containing polymer, and it is preferable to add the neutralizing agent after the synthesis. When the component (C) described later is added to the binder, it is preferable to add a neutralizing agent, a polyhydric alcohol (B), and a polyamine (C) in this order to the synthesized carboxyl group-containing polymer.

The carboxyl group-containing polymer may contain a structural unit derived from a monomer other than an unsaturated carboxylic acid monomer (hereinafter also referred to as other monomer(s)).Examples of other monomers include a monomer having an ethylenically unsaturated group and a hydroxyl group (hereinafter also referred to as an unsaturated alcohol); alkyl(meth)acrylates such as methyl(meth) acrylate, ethyl(meth)acrylate, butyl(meth)acrylate, cyclohexyl(meth)acrylate and lauryl(meth)acrylate; amino group-containing acrylates such as dimethylaminoethyl (meth)acrylate or salts thereof; monomers having a amide group such as (meth)acrylamide, dimethylacrylamide, and isopropylacrylamide; vinyl esters such as vinyl acetate; alkenes such as ethylene and propylene; aromatic vinyl monomers such as styrene; maleimide derivatives such as maleimide, phenylmaleimide and cyclohexylmaleimide; vinyl monomers containing a nitrile group such as (meth)acrylonitrile; monomers having a sulfonic group such as 3-allyloxy-2-hydroxypropanesulfonic acid, 2-acrylamido-2-methylpropanesulfonic acid, styrenesulfonic acid and vinylsulfonic acid or salts thereof; vinyl monomers containing a phosphonic acid group such as vinylphosphonic acid, allylphosphonic acid, methallylphosphonic acid; vinyl monomers containing an aldehyde group such as (meth)acrolein; alkyl vinyl ethers such as methyl vinyl ether, ethyl vinyl ether and butyl vinyl ether; vinyl chloride, vinylidene chloride and allyl alcohol; and other functional group-containing monomers such as vinyl pyrrolidone. These may be used alone or in combination of two or more thereof.

As the monomer having an ethylenically unsaturated group and a hydroxyl group, allyl alcohol, β-methallyl alcohol, isoprenol, 3-methyl-3-buten-1-ol, 3-methyl-2-buten-1-ol, 2-methyl-3-buten-2-ol, and unsaturated alcohols such as compounds represented by general formula (2). 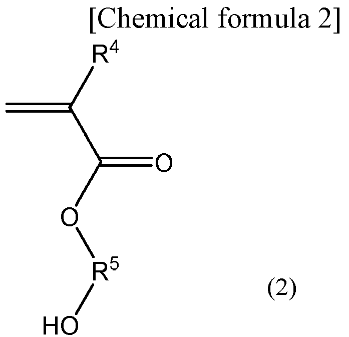 [In General Formula (2), R⁴ represents a hydrogen atom or a methyl group, and R⁵ represents an organic group having 2 to 20 carbon atoms.]

Specific examples of R⁵ in general formula (2) include alkylene groups such as -CH₂CH₂- group, -CH(CH₃)CH₂- group, -CH₂CH(CH₃)-group, -C(CH₃)₂- group, -CH₂CH₂CH₂- group, -CH(C₂H₅)CH₂- group, - C(C₂H₅)(CH₃)- group, -CH₂CH₂CH₂CH₂- group and -CH(C₄H₉)CH₂-group; arylene groups such as phenylene group and naphthyl group; ether groups such as -CH₂CH₂OCH₂CH₂- group, - CH₂CH₂OCH₂CH₂OCH₂CH₂- group, - CH₂CH₂OCH₂CH₂OCH₂CH₂OCH₂CH₂- group, - CH(CH₃)CH₂OCH(CH₃)CH₂OCH(CH₃)CH₂- group, and the like.

The content of the structural unit derived from the unsaturated alcohol in the carboxyl group-containing polymer is preferably 15 mol% or less, more preferably 10 mol% or less, and even more preferably 5 mol% or less with respect to 100 mol% of the total structural unit contained in the carboxyl group-containing polymer. The carboxyl group-containing polymer may not contain a structural unit derived from an unsaturated alcohol.

The content of the structural unit derived from the unsaturated carboxylic acid monomer in the carboxyl group-containing polymer is preferably 85 mol% or more, more preferably 90 mol% or more, and even more preferably 95 mol% or more with respect to 100 mol% of the total structural unit contained in the carboxyl group-containing polymer. The carboxyl group-containing polymer may contain no structural unit other than the structural unit derived from the unsaturated carboxylic acid monomer.

The carboxyl group-containing polymer of the present embodiment may be a homopolymer containing only a structural unit derived from one kind of monomer, or a copolymer containing structural units derived from two or more kinds of monomers. In the case of a copolymer, the carboxyl group-containing polymer may be a random copolymer or a block copolymer.

The structural unit derived from the unsaturated carboxylic acid monomer and the structural unit derived from the other monomer are structural units formed by radical polymerization of the unsaturated carboxylic acid monomer and the other monomer, respectively, but may be formed by different methods as long as they have the same chemical structure as the structural unit formed by radical polymerization, even if they are not actually formed by radical polymerization of the monomer.

The carboxyl group-containing polymer of this embodiment may contain a phosphorus element. The phosphorus element may be derived from, for example, a phosphorus-containing compound used as a chain transfer agent in the synthesis of a carboxyl group-containing polymer. That is, in this case, the phosphorus element is contained in the residue of the phosphorus-containing compound bonded to the carboxyl group-containing polymer. Since when the carboxyl group-containing polymer contains a phosphorus element, the curing reaction of the binder is accelerated, it is preferable.

Examples of the phosphorus-containing compound include oxoacids of phosphorus or the salts such as hypophosphorous acid (salt), phosphorous acid (salt), phosphoric acid (salt), pyrophosphoric acid (salt), polyphosphoric acid (salt), and organophosphoric acid (salt). The content of the phosphorus element in the carboxyl group-containing polymer is preferably 0 to 20 mass%, more preferably 0.1 to 15 mass%, and even more preferably 0.5 to 10 mass%, in terms of phosphorus-containing compound, with respect to 100 mass% of the component (A). The phosphorus-containing compound contained as a residue in the carboxyl group-containing polymer may be one kind or two or more kinds.

The content of the component (A) in the binder of this embodiment is preferably 10 to 90 mass%, and preferably 20 to 80 mass% with respect to the total amount of the binder of 100 mass%.

The polymer of this embodiment can be obtained by polymerizing the above-mentioned unsaturated carboxylic acid monomer and other monomers by a known conventional method. For example, it is preferable to use a polymer produced by a solution polymerization method or the like in which the above-mentioned unsaturated carboxylic acid monomer and other monomers are polymerized under a heating reflux condition in the presence of a polymerization initiator and a chain transfer agent in water. As the polymerization initiator, sodium persulfate is preferable. As the chain transfer agent, the above-mentioned oxoacid of phosphorus or the salt, sodium bisulfate and the like are preferable.

### Component (B): Polyhydric Alcohol

The polyhydric alcohol of the present embodiment satisfies at least one of the following conditions (1) and (2). The polyhydric alcohol may satisfy both of the following conditions (1) and (2).
(1) having a viscosity of 900 mPa·s or less at 20 °C;
(2) comprising at least one compound from the group consisting of hydrocarbon compounds substituted with 2 to 10 hydroxyl groups (hereinafter also referred to as component (B1)) and polyalkylene glycols (hereinafter also referred to as component (B2)). The polyhydric alcohol mainly functions as a crosslinking agent for crosslinking the carboxyl group-containing polymer in the curing reaction of the binder.

When such a polyhydric alcohol is used as the binder, it is possible to prevent the viscosity of the binder from increasing and to enhance the impregnation property. Further, unlike conventionally used amino group-containing polyhydric alcohols such as diethanolamine and triethanolamine, there is little concern about a decrease in the strength of the solidified body due to inhibition of the curing reaction caused by an increase in the pH of the binder by protonation of the amino group.

The viscosity of the polyhydric alcohol at 20 °C is preferably 500 mPa·s or less, more preferably 250 mPa·s or less, even more preferably 100 mPa·s or less, and particularly preferably 50 mPa·s or less. The viscosity of the polyhydric alcohol is the viscosity of each polyhydric alcohol as a pure substance (that is, as a liquid of a single component system). Examples of polyhydric alcohols having such a viscosity include dihydric alcohols such as ethylene glycol (20 mPa·s), diethylene glycol (36 mPa·s), 1, 2-propanediol (56 mPa·s), 1, 4-butanediol(98 mPa·s), tetraethylene glycol (55 mPa·s), 1, 2-pentanediol (180 mPa·s at 20 °C), 2-methyl-2, 4-pentadiol (34mPa·s), and 3-methyl-1, 5-pentadiol (173 mPa·s) (the value in parentheses is the viscosity of each compound at 20 °C). The viscosity can be measured using, for example, a B-type viscometer.

Component (B1) is a compound obtainable by substituting 2 to 10 hydrogen atoms of a hydrocarbon compound with a hydroxyl group. It should be noted that the term "obtainable by substituting" in the present specification is a term that formally indicates a chemical structure, and does not refer only to a compound obtained by actually substituting hydrogenic atoms with hydroxyl groups. Therefore, a compound having a chemical structure obtainable by substituting 2 to 10 hydrogen atoms of a hydrocarbon compound with hydroxyl groups may be obtained by a chemical reaction other than direct substitution of the hydrogen atom with the hydroxyl group, or may be a natural product.

The component (B 1) may have 2 to 8 hydroxyl groups, 2 to 5 hydroxyl groups, or 2 or 3 hydroxyl groups. Component (B1) may have 2 to 20 carbon atom, may have 2 to 10 carbon atoms, and may have 2 to 5 carbon atoms. The hydrocarbon compound may be an aliphatic hydrocarbon compound or an aromatic hydrocarbon compound. The aliphatic hydrocarbon compound may be a saturated hydrocarbon compound or an unsaturated hydrocarbon compound, and is preferably a saturated hydrocarbon compound. The aliphatic hydrocarbon compound may be a chain aliphatic hydrocarbon compound or an aliphatic hydrocarbon compound containing a cyclic structure.

Examples of the component (B 1) include alkanediols such as ethylene glycol, propylene glycol, 1, 3-propanediol, 1, 3-butylene glycol, 1, 4-butanediol, 1, 5-pentanediol and 1, 6-hexanediol; and alcohols having 3 or more hydroxyl groups such as glycerin, trimethylol propane, trimethylol ethane, erythritol, xylitol and sorbitol.

Examples of the component (B2) include compounds represented by the following general formula (3) : 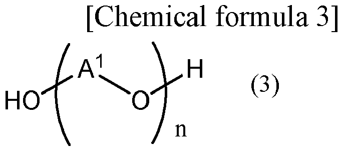 (In General Formula (3), A¹ is a divalent hydrocarbon group having 2 to 5 carbon atom, n is 2 to 20, and A¹ may be one kind or two or more kinds in one molecule.)

In general formula (3), examples of the divalent hydrocarbon group include an ethylene group, a 1, 3-propylene group, a 1, 2-propyl group, a 1, 4-butylene group, and a 1, 3-butylene group, and one or two or more thereof may be included. A subscript n may be an average value (that is, a rational number) based on the number of molecules over the entire (B2) component, or may be an integer. A subscript n is preferably from 2 to 10 and may be from 2 to 5.

Examples of the component (B2) include polyalkylene glycols such as diethylene glycol, triethylene glycol and tetraethylene glycol.

From the viewpoint of further improving the impregnation property of the binder, the molecular weight of the polyhydric alcohol is preferably 1000 g/mol or less, more preferably 500 g/mol or less, and still more preferably 200 g/mol or less.

From the viewpoint of improving the impregnation property of the binder and the mechanical strength of the obtained solidified body, in the binder, a molar ratio between the carboxylic acid group of component (A) and component (B) (molar amount of the carboxylic acid group of component (A): molar amount of component (B)) is preferably 79 : 21 to 35 : 65, preferably 75 : 25 to 40 : 60, and more preferably 70 : 30 to 40 : 60.

The content of the component (B) in the binder of the present embodiment is preferably 5 to 60 mass% and preferably 7 to 50 mass% with respect to 100 mass% of the total amount of the binder.

### <Other Components>

The binder of this embodiment may comprise components other than component (A) and component (B). For example, the binder may further comprise at least one of a polyamine (hereinafter, also referred to as component (C)) and a silane coupling agent (hereinafter, also referred to as component (D)).

(C) The polyamine is not particularly problematic as long as it is a compound having two or more amino groups in the molecules, but it is preferably an amine compound having 4 or more nitrogen atom per molecule. Examples of the polyamine (C) include polyalkylene polyamines, polyamide polyamines, polyalkylene imine alkylene oxides, polyvinyl amines, and the like, and polyalkylene polyamines are preferred. Examples of the polyalkylene polyamine include a polymer or copolymer having one or two or more alkyleneimines as a monomer (that is, a polyalkyleneimine), and an alkyleneimine adduct of an aliphatic polyamine. The polyalkyleneimine is preferably a polymer or copolymer of alkyleneimines having 2 to8 carbon atoms (more preferably 2 to 6), more preferably a polymer or copolymer of one or two or more alkyleneimines selected from the group consisting of ethyleneimine, propyleneimine, 1, 2-butylene imine, 2, 3-butylene imine and 1, 1-dimethylethyleneimine, and even more preferably a polymer of ethyleneimine (polyethylenimine). The alkyleneimine adduct of an aliphatic polyamine is preferably one obtained by adding (ring-opening) an alkyleneimine to 2 to 6 alkylenediamines (for example, ethylenediamine). As the alkyleneimines of the adduct, those exemplified as a monomer of a polyalkyleneimine are preferable. The polyalkyleneimine and the adduct may not be produced by directly subjecting the alkyleneimine to polymerization or addition reaction, but may be synthesized by another chemical reaction as long as they have the same chemical structure as the polyalkyleneimine and the adduct. The number average molecular weight of the polyamine may be 200 to 500000 g/mol, may be 250 to 100000 g/mol, may be 250 to 80000 g/mol, may be 300 to 50000 g/mol, may be 400 to 10000 g/mol, may be 500 to 5000 g/mol. Only one polyamine may be used, or two or more polyamines may be used in combination. It is preferable that the polyamine (C) does not contain a hydroxyl group.

The content of component (C) in the binder is preferably 0.01 to 5 parts by mass, more preferably 0.1 to 3 parts by mass, based on 100 parts by mass of the total amount of components (A) and (B).

When the binder contains the component (D), the component (D) tends to act at the interface between the filler and the binder to enhance the impregnation property of the binder and the strength of the resulting solid. Examples of the silane coupling agent include aminosilane coupling agents such as γ-aminopropyltriethoxysilane, γ-(2-aminoethyl)aminopropyltrimethoxysilane and γ-(2-aminoethyl)aminopropylmethyldimethoxysilane, and epoxysilane coupling agents such as γ-glycidoxypropyltrimethoxysilane and γ-glycidoxypropylmethyldimethoxysilane. These may be used alone or in combination of two or more thereof.

The content of the silane coupling agent in the binder is preferably 0.01 to 5 parts by mass, more preferably 0.1 to 3 parts by mass, based on 100 parts by mass of the total amount of the components (A) and (B).

The binder may further comprise a free phosphorus-containing compound. The phosphorus compound is preferable because it is considered to have an effect of promoting the crosslinking of the component (A). Examples of the free phosphorus-containing compound include oxoacids of phosphorus such as hypophosphorous acid (salt), phosphorous acid (salt), phosphoric acid (salt), pyrophosphoric acid (salt), polyphosphoric acid (salt) organophosphorous acid (salt), or salts or esters thereof (including hydrates thereof); organophosphorous compounds such as trimethylphosphine, triphenylphosphine and triphenylphosphine oxide; and the like. When the binder comprise a phosphorus-containing compound, it may contain one kind or two or more kinds thereof. Examples of the salt include those described above. The content of the phosphorus-containing compound in the binder is preferably 20% by mass or less, more preferably 0.1 to 10% by mass, and even more preferably 0.5 to 7% by mass with respect to 100% by mass of the component (A). When component (A) contains a phosphorus element, the content of the phosphorus-containing compound may be the sum of the content of the phosphorus element contained in component (A) (in terms of the free phosphorus-containing compound) and the content of the free phosphorus-containing compound.

The binder may further contain a curing accelerator other than a phosphorus-containing compound. Examples of such curing accelerators include protonic acids (sulfuric acid, carboxylic acid, carbonic acid, and the like) and salts thereof (metal (alkali metals, alkaline earth metals, transition metals, 2B, 4A, 4B, 5B and the like) salts, ammonium salts and the like)) and metal (as described above) oxides, chlorides, hydroxides, and alkoxides and the like. These may be used alone or in combination of two or more thereof.

The binder may comprise a solvent. The solvent may be an organic solvent, but is preferably water. That is, the binder may be an aqueous solution. The content of water in the binder (aqueous solution) is preferably 10 to 80% by mass, more preferably 20 to 70% by mass, and even more preferably 25 to 60% by mass with respect to 100% by mass of the total amount of the binder.

The binder may also be in a form that contains no or only a small amount of water. In this case, the content of water in the binder may be less than 10% by mass, 5% by mass or less, or 1% by mass or less based on 100% by mass of the total amount of the binder. Such a binder may be used as it is according to the application, or may be used after being diluted by adding a solvents such as water during use.

The binder may further comprise an additive such as a rust inhibitor, a coloring agent, a dust-proof agent such as a heavy oil water dispersion, and an inorganic sulfate salt (neutralizing agent). The inorganic sulfate salt has a function of neutralizing alkali components eluted from inorganic fibers such as glass, and examples thereof include ammonium sulfate. The content of component (A) and component (B) in the binder may be 90% by mass or more and 95% by mass or more with respect to 100% by mass of the total amount of the binder excluding the solvent.

From the viewpoint of further improving impregnation properties, the viscosity of the binder is preferably 200 mPa s or less, more preferably 180 mPa·s or less, even more preferably 160 mPa·s or less, even more preferably 120 mPa·s or less, and particularly preferably 100 mPa·s or less at 25 °C. The viscosity of the binder can be appropriately adjusted by adjusting the mixing ratio of components (A) and (B) and the content of water. The viscosity can be measured using, for example, a B-type viscometer.

The pH of the binder is preferably 1 to 4.0, more preferably 1.5 to 3.7 or less, and even more preferably 2 to 3.5.

### <Filler>

The binder of the present embodiment can be suitably used for bonding a filler (a material to be bonded). The filler is not particularly limited, and may be an inorganic filler or an organic filler. Further, the shape of the filler is not particularly limited, and it can be used for a filler having any shapes such as fiber or particle. The fibrous filler may be either a woven fabric or a nonwoven fabric. Since the binder of the present embodiment is excellent in impregnation property, it is useful as a binder for fibers, and particularly useful when used for a nonwoven fabric.

The inorganic filler may be, for example, an inorganic fiber such as glass fiber, rock wool, carbon fiber, or the like (may be either a woven fabric or a non-woven fabric, and a non-woven fabric is preferable); inorganic particles (inorganic powder) such as powder glass, glass particles (glass beads), mineral particles, and the like. Among these, glass fiber or powdered glass is preferable because the solidified body can be widely used as a heat insulating material. The binder of this embodiment is particularly useful for bonding glass non-woven fabric fibers (for example, glass wool).

Examples of organic fillers include fibers of organic substances such as wool, cellulose, hemp, nylon, and polyester ; and particles of organic substances such as fine nylon particles and fine polyester particles (powders of organic substances).

### <Solidified Body>

The solidified body of this embodiment comprises a solidified product of the above-mentioned binder and a filler bonded by the solidified body. In other words, it can be said that the solidified body of the present embodiment is a composite material containing a solidified product of the binder and a filler.

### <Method for Producing Solidified Body>

The method for producing a solidified body is not particularly limited, but is not particularly limited as long as it includes a step of solidifying a precursor obtained by bringing the above-mentioned component (A) and component (B) into contact with a filler. Components (A) and (B) may be mixed in a predetermined molar ratio, may be with other components if necessary, in advance to prepare a binder, and the binder may be brought into contact with a filler (for example, the filler may be impregnated or mixed with the filler) to prepare a precursor, but the step of preparing the binder in advance may not be conducted. In the case where the step of preparing the binder is not provided, for example, the precursor may be prepared by adding the component (A) and the component (B) together with other components as if necessary, in a lump or sequentially to the filler and mixing or impregnating the filler. The precursor may be formed into a desired shape prior to the solidification step described later.

The content of the binder in the precursor is preferably 1 to 40 parts by mass, more preferably 1 to 30 parts by mass, and even more preferably 1 to 15 parts by mass, in terms of solid content, per 100 parts by mass of the filler. When the adhesion amount of the binder is in the above-mentioned range, the mechanical strength of the produced solidified body tends to be improved.

After the precursor is prepared, the precursor is solidified as a whole by solidifying the binder contained in the precursor. Examples of a method for solidifying the precursor include a method of heating the precursor (heating step). The heating temperature and heating time in the heating step may be, for example, 100 to 300 °C and 1 to 120 minutes, but from the viewpoint of operability, it is preferable to perform the heating at a low temperature for a short time. For example, the heating temperature is preferably 120 to 250 °C, more preferably 140 to 230 °C, and still more preferably 150 to 200 °C.
The heating time is preferably 1 to 60 minutes, more preferably 1 to 45 minutes, and even more preferably 1 to 30 minutes.

In addition, the binder of the present embodiment tends to have a low temperature curing property and a fast curing property, and is advantageous from the viewpoint of saving energy and shortening the curing time during the curing reaction. For example, the full cure temperature can be used as an indicator of the low temperature and fast cure properties of the binder. The full curing temperature of the binder is preferably 195 °C or less, more preferably 185 °C or less, even more preferably 180 °C or less, still more preferably 175 °C or less, and particularly preferably 165 °C or less.

The full curing temperature of the binder can be measured using a dynamic viscoelasticity measuring apparatus at a temperature increasing rate of 4 °C/min from 30 °C to 250 °C so that the storage modulus becomes constant.

### Examples

Although the present disclosure will be described in more detail below by examples, the present disclosure is not limited to these examples only. Unless otherwise specified, "%" means "% by mass".

As component (A), carboxyl group-containing polymers having various weight-average molecular weights were prepared as described below. The weight average molecular weights and the solid contents of the component (A) were measured under the following conditions.

### Measurement conditions of a weight-average molecular weight (Mw)

The weight average molecular weight (Mw) was measured under the following conditions.
Apparatus: HLC-8320 GPC from Tosoh Corporation
Detector: RI
Column: TSK-GEL G3000PWXL from Tosoh Corporation
Column temperature: 35 °C
Flow rate: 0.5 ml/min
Calibration curve: POLY SODIUM ACRYLATE STANDARD from Sowa Kagaku Co., Ltd.
Eluent: A solution obtained by diluting a mixture of sodium dihydrogen phosphate dihydrate/disodium hydrogen phosphate dihydrate (34.5 g/46.2 g) to 5000 g with pure water.

### Method for measuring solid content of aqueous polymer solution after completion of polymerization

An aqueous polymer solution was allowed to stand for 60 minutes in an oven heated to 130 °C and dried. Based on the weight change before and after drying, a solid content (%) of the aqueous polymer solution after completion of polymerization was calculated.

### Manufacturing Example 1

316.3 g of pure water was charged into a 2.5 liter SUS separable flask equipped with a reflux cooling machine, a stirrer (paddle wing), and a thermometer (initial charge), and the temperature was raised to the boiling point under stirring. Then, an aqueous solution of acrylic acid (80% by mass, 900.0 g (i.e. 10.0 mol) for 180 minutes, hereinafter, referred to as "80% AA"), an aqueous solution of sodium persulfate (15% by mass, 71.0 g for 195 minutes, hereinafter referred to as "15% NaPS"), and an aqueous solution of sodium hypophosphite (45% by mass, 25.7 g for 18 minutes and 101.7 g for 162 minutes at two feed rates, hereinafter referred to as "45% SHP") were supplied dropwise from a tip nozzle through separate feed paths into a polymerization reaction system at the boiling point reflux state under stirring. Each component was dropped continuously at a constant dropping rate except for 45% SHP. After the addition of 80% AA, the reaction solution was kept at the boiling point reflux state (aged) for another 30 minutes to complete the polymerization. After completion of the polymerization, 417.8 g of pure water was added to the reaction solution to obtain an aqueous solution having a solid content of 44.3%, a number average molecular weight of 1920, and a weight average molecular weight of 3080 (polydispersity: 1.60). Hereinafter, the obtained polymer is also referred to as PAA3000.

### Manufacturing Example 2

329.0 g of pure water was charged into a 2.5 liter SUS separable flask equipped with a reflux cooling machine, a stirrer (paddle wing), and a thermometer (initial charge), and the temperature was raised to the boiling point under stirring. Then, an aqueous solution of acrylic acid (80% by mass, 900.0 g (i.e., 10.0 mol) for 180 minutes, hereinafter referred to as "80% AA"), an aqueous solution of sodium persulfate (15% by mass, 59.2 g for 195 minutes, hereinafter referred to as "15% NaPS"), and an aqueous solution of sodium hypophosphite (45% by mass, 21.4 g for 18 minutes and 84.8 g for 162 minutes at two feed rates, hereinafter referred to as "45% SHP") were supplied dropwise from a tip nozzle through separate feed paths into a polymerization reaction system at the boiling point reflux state under stirring. Each component was dropped continuously at a constant dropping rate except for 45% SHP. After the addition of 80% AA, the reaction solution was kept at the boiling point reflux state (aged) for another 30 minutes to complete the polymerization. After completion of the polymerization, 411.8 g of pure water was added to the reaction solution to obtain an aqueous solution having a solid content of 44.7%, a number average molecular weight of 2260, and a weight average molecular weight of 4080 (polydispersity: 1.81). Hereinafter, the obtained polymer is also referred to as PAA4000.

### Manufacturing Example 3

437.4 g of pure water was charged into a 2.5 liter SUS separable flask equipped with a reflux cooling machine, a stirrer (paddle wing), and a thermometer (initial charge), and the temperature was raised to the boiling point under stirring. Then, an aqueous solution of acrylic acid (80% by mass, 1560.0 g (i.e., 17.3 mol) for 180 minutes, hereinafter referred to as "80% AA"), aqueous solution of sodium persulfate (15% by mass, 55.0 g for 195 minutes, hereinafter referred to as "15% NaPS"), and an aqueous solution of sodium hypophosphite (45% by mass, 26.9 g for 18 minutes and 107.7 g for 162 minutes at two feed rates, hereinafter referred to as "45% SHP") were supplied dropwise from a tip nozzle through separate feed paths into a polymerization reaction system at the boiling point reflux state under stirring. Each component was dropped continuously at a constant dropping rate except for 45% SHP. After the addition of 80% AA, the reaction solution was kept at the boiling point reflux state (aged) for another 30 minutes to complete the polymerization. After completion of the polymerization, 207.2 g of pure water was added to the reaction solution to obtain an aqueous solution having a solid content of 56.3%, a number average molecular weight of 2890, and a weight average molecular weight of 5980 (polydispersity: 2.07). Hereinafter, the obtained polymer is also referred to as PAA6000.

### Manufacturing Example 4

401.8 g of pure water was charged into a 2.5 liter SUS separable flask equipped with a reflux cooling machine, a stirrer (paddle wing), and a thermometer (initial charge), and the temperature was raised to the boiling point under stirring. Then, an aqueous solution of acrylic acid (80% by mass, 1200.0 g (i.e., 13.3 mol) for 180 minutes, hereinafter referred to as "80% AA"), an aqueous solution of sodium persulfate (15% by mass, 42.3 g for 195 minutes, hereinafter referred to as "15% NaPS") and aqueous solution of sodium hypophosphite (45% by mass, 15.9 g for 18 minutes and 63.8 g for 162 minutes at two feed rates, hereinafter referred to as "45% SHP") were supplied dropwise from a tip nozzle through separate feed paths into a polymerization reaction system at a boiling point reflux state under stirring. Each component was dropped continuously at a constant dropping rate except for 45% SHP. After the addition of 80% AA, the reaction solution was kept at the boiling point reflux state (aged) for another 30 minutes to complete the polymerization. After completion of the polymerization, 269.9 g of pure water was added to the reaction solution to obtain an aqueous solution (PAA8000) having a solid content of 51.5%, a number average molecular weight of 3570, and a weight average molecular weight of 8070 (polydispersity: 2.26). Hereinafter, the obtained polymer is also referred to as PAA8000.

### Manufacturing Example 5

400.0 g of pure water was charged into a 2.5 liter SUS separable flask equipped with a reflux cooling machine, a stirrer (paddle wing), and a thermometer (initial charge), and the temperature was raised to the boiling point under stirring. Then, an aqueous solution of acrylic acid (80% by mass, 1051.8 g (i.e., 11.7 mol) for 180 minutes, hereinafter referred to as "80% AA"), an aqueous solution of sodium persulfate (15% by mass, 35.4 g for 195 minutes, hereinafter referred to as "15% NaPS"), and an aqueous solution of sodium hypophosphite (45% by mass, 5.5 g for 18 minutes and 22.0 g for 162 minutes at two feed rates, hereinafter referred to as "45% SHP") were supplied dropwise from a tip nozzle through separate feed paths into a polymerization reaction system at a boiling point reflux state under stirring. Each component was dropped continuously at a constant dropping rate except for 45% SHP. After the addition of 80% AA, the reaction solution was kept at the boiling point reflux state (aged) for another 30 minutes to complete the polymerization. After completion of the polymerization, 165.8 g of pure water was added to the reaction solution to obtain an aqueous solution having a solid content of 52.4%, a number average molecular weight of 7410, and a weight average molecular weight of 29290 (polydispersity: 3.95). Hereinafter, the obtained polymer is also referred to as PAA30000.

The binder of Examples 1 to 20 and Comparative Examples 1 to 11 was prepared by blending (A) a carboxyl group-containing polymer, (B) a polyhydric alcohol, (C) a polyamine, and (D) a silane coupling agent at blending ratios shown in Tables 1 to 3. Each binder thus obtained was subjected to various performance evaluations by adding an appropriate amount of water as shown below. The results are shown in Tables 1-3.

The viscosity of the polyhydric alcohol (B) at 20 °C is as follows.
Ethylene glycol: 20 mPa·s
Diethylene glycol: 36 mPa·s
Tetraethylene glycol: 55 mPa·s
1, 4-Butanediol: 98 mPa·s
Diethanolamine: 1000 mPa·s
Triethanolamine: 1013 mPa·s

In Tables 1 to 3, the content of component (A) is the amount of a structural unit derived from acrylic acid (mol), and the unit of the content of component (B) is mol.

Abbreviations of each component in Tables 1 to 3 are as follows.

### <Component (C): Polyamine>

PEI (1): polyethylenimine (trade name: Epomin (registered trademark) SP-006, from Nippon Shokubai Co., Ltd., number average molecular weight 600 (measured by elevation of boiling point method))
PEI (2): polyethyleneimine (trade name: Epomin (registered trademark) P-1000, manufactured by Nippon Shokubai Co., Ltd., number average molecular weight: 70000 (measured by viscosity method))

### <Component (D): Silane Coupling Agent>

Silane I: γ-glycidoxypropyltrimethoxysilane (from Shin-Etsu Chemical Co., Ltd.)
Aminosilane: γ-(2-aminoethyl) aminopropyltrimethoxysilane (from Tokyo Chemical Industry Co., Ltd.)

In Tables 1 to 3, the content of component (C) and the content of component (D) are parts by mass with respect to 100 parts by mass of the total content of components (A) and (B).

### <Preparation of Test Piece>

A test piece for measuring mechanical strength was prepared as follows.
(i) Pure water was added to the binder and diluted so that the amount of the binder was 35% by mass to prepare an aqueous solution of the binder.
(ii) The aqueous solution of the binder obtained in (i) was added to glass beads having a particle diameter of 0.50 to 0.150 mm so that the aqueous solution of the binder was 5.0% of the mass of the glass beads, and the mixture was sufficiently mixed to obtain a mixture.
(iii) The mixture obtained in (ii) was pressed into a mold having a size of 120 mm × 20 mm × 5 mm subjected to a release treatment, molded and dried in an oven at 210 °C for 30 minutes, and then cooled at room temperature for 30 minutes to obtain a test piece.

### <Mechanical Strength of Test Piece>

The bending strength of the test piece was measured at a test speed of 2 mm/min in accordance with JISK7171. The bending strength of three test pieces was measured and the average value was calculated.

### <Evaluation Method for Impregnation of Glass Beads>

30 g of glass beads having a particle diameter of 0.50 to 0.150 mm were laid in a schale having a diameter of 120 mm so as to have a uniform height, and 3 g of the above-mentioned aqueous solution of the binder was slowly added dropwise to the central portion of the schale. After the completion of dropwise addition, a spread area of the binder on the glass beads after 10 seconds was calculated. The areas were classified according to the following criteria and their impregnation was evaluated.
A: 25 cm² or more
B: 20 cm² or more and less than 25 cm²
C: less than 20 cm²

### <Evaluation Method of Complete Curing Temperature>

A dynamic viscoelasticity measuring apparatus (DMA) was used to perform measurement at a temperature increasing rate of 4 °C/min from 30 °C to 250 °C. The temperature at which the storage modulus became constant was defined as the complete curing temperature.

### <Method for Measuring pH>

The pH value of an aqueous solution of a binder obtained by adding pure water to the binder to be diluted to 50% at 25 °C was measured using a pH meter (trade name "D-51" from HORIBA). The results are shown in Tables 1-3.

### <Viscosity Measurement Method>

With respect to an aqueous solution of a binder obtained by adding pure water to be diluted to 50%, a viscosity was measured at 25 °C at a rotation speed of 30 rpm using a B-type viscometer (manufactured by TOKYO KEIKI INC.). Appropriate spindles were used depending on the range of viscosity to be measured. The results are shown in Tables 1-3.

**[Table 1]**

| Example number | | 1 | 2 | 3 | 4 | 5 | 6 | 7 | 8 | 9 | 10 | 11 | 12 |
|---|---|---|---|---|---|---|---|---|---|---|---|---|---|
| (A) | PAA 3000 | - | - | - | 50 | - | - | - | 50 | - | 70 | - | - |
| | PAA 4000 | 70 | 60 | 50 | - | 70 | 60 | 50 | - | 70 | - | - | - |
| | PAA 6000 | - | - | - | - - | - | - | - | - | - | - | 70 | 75 |
| | PAA 8000 | - | - | - | - | - | - | - | - | - | - | - | - |
| | PAA 30000 | - | - | - | - | - | - | - | - | - | - | - | - |
| (B) | Ethylene Glycol | 30 | 40 | 50 | 50 | - | - | - | 50 | - | - | 30 | 25 |
| | Diethylene Glycol | - | - | - | - | 30 | 40 | 50 | - | - | - | - | - |
| | Tetraethylene Glycol | - | - | - | - | - | - | - | - | 30 | - | - | - |
| | 1,4-Butanediol | - | - | - | - | - | - | - | - | - | 30 | - | - |
| | Diethanolamine | - | - | - | - | - | - | - | - | - | - | - | - |
| | Triethanolamine | - | - | - | - | - | - | - | - | - | - | - | - |
| (C) | PEI (1) | - | - | - | - | - | - | - | - | - | - | - | - |
| | PEI (2) | - | - | - | - | - | - | - | - | - | - | - | - |
| (D) | Silane I | - | - | - | - | - | - | - | - | - | - | - | - |
| | Aminosilane | - | - | - | - | - | - | - | - | - | - | - | - |
| Performance Evaluation | Impregnation property | A | A | A | A | A | A | A | A | B | B | B | B |
| | Viscosity [mPa·s] | 94 | 58 | 38 | 20 | 88 | 52 | 34 | 34 | 155 | 192 | 170 | 198 |
| | pH | 2.7 | 2.7 | 2.7 | 2.7 | 2.6 | 2.6 | 2.7 | 2.7 | 2. 7 | 2.7 | 2.7 | 2.6 |
| | Full cure temperature [°C] | 175 | 167 | 161 | 168 | 178 | 170 | 163 | 170 | 179 | 181 | 181 | 184 |
| | Strength [MPa] | 20.4 | 21 | 22.1 | 20.1 | 20.7 | 18.9 | 16.8 | 15.5 | 18.1 | 15.6 | 19.4 | 18.2 |

**[Table 2]**

| Example number | | 13 | 14 | 15 | 16 | 17 | 18 | 19 | 20 | 21 | 22 |
|---|---|---|---|---|---|---|---|---|---|---|---|
| (A) | PAA 3000 | - | - | - | - | - | - | - | - | - | - |
| | PAA 4000 | 40 | 40 | 40 | 70 | 60 | 50 | 70 | 70 | 70 | 70 |
| | PAA 6000 | - | - | - | - | - | - | - | - | - | - |
| | PAA 8000 | - | - | - | - | - | - | - | - | - | - |
| | PAA 30000 | - | - | - | - | - | - | - | - | - | - |
| (B) | Ethylene Glycol | 60 | - | - | 30 | 40 | 50 | 30 | 30 | 30 | 30 |
| | Diethylene Glycol | - | 60 | - | - | - | - | - | - | - | - |
| | Tetraethylene Glycol | - | - | 60 | - | - | - | - | - | - | - |
| | 1,4-Butanediol | | | | - | - | - | | | | |
| | Diethanolamine | - | - | - | - | - | - | - | - | - | - |
| | Triethanolamine | - | - | - | - | - | - | - | - | - | - |
| (C) | PEI (1) | - | - | - | 0.3 | 0.3 | 0.3 | - | - | - | 0.3 |
| | PEI (2) | - | - | - | - | - | - | 0.3 | - | - | - |
| (D) | Silane I | - | - | - | - | - | - | - | 0.3 | - | - |
| | Aminosilane | - | - | - | - | - | - | - | - | 0.3 | 0.3 |
| Performance Evaluation | Impregnation property | A | A | A | A | A | A | A | A | A | A |
| | Viscosity [mPa·s] | 28 | 24 | 73 | 97 | 62 | 42 | 99 | 92 | 93 | 99 |
| | pH | 2.9 | 2.9 | 2.9 | 2.7 | 2.7 | 2.7 | 2.7 | 2.7 | 2.7 | 2.7 |
| | Full cure temperature [°C] | 168 | 169 | 173 | 173 | 167 | 162 | 172 | 175 | 175 | 173 |
| | Strength [MPa] | 20.2 | 16.0 | 15.1 | 21.1 | 20.7 | 20.5 | 20.6 | 21.0 | 20.8 | 21.4 |

**[Table 3]**

| Comparative Example number | | 1 | 2 | 3 | 4 | 5 | 6 | 7 | 8 | 9 | 10 | 11 | 12 |
|---|---|---|---|---|---|---|---|---|---|---|---|---|---|
| (A) | PAA 3000 | - | - | - | 50 | - | - | - | - | - | - | - | - |
| | PAA 4000 | 80 | 70 | 60 | | 80 | 70 | 60 | - | - | 30 | 20 | 80 |
| | PAA 6000 | - | - | - | - | - | - | - | - | - | - | - | - |
| | PAA 8000 | - | - | - | - | - | - | - | 70 | - | - | - | - |
| | PAA 30000 | - | - | - | - | - | - | - | - | 70 | - | - | - |
| (B) | Ethylene Glycol | - | - | - | - | - | - | - | 30 | 30 | 70 | 80 | 20 |
| | Diethylene Glycol | - | - | - | - | - | - | - | - | - | - | - | - |
| | Tetraethylene Glycol | - | - | - | - | - | - | - | - | - | - | - | - |
| | 1,4-Butanediol | - | - | - | - | - | - | - | - | - | - | - | - |
| | Diethanolamine | 20 | 30 | 40 | 50 | - | - | - | - | - | - | - | - |
| | Triethanolamine | - | - | - | - | 20 | 30 | 40 | - | - | - | - | - |
| (C) | PEI (1) | - | - | - | - | - | - | - | - | - | - | - | - |
| | PEI (2) | - | - | - | - | - | - | - | - | - | - | - | - |
| (D) | Silane I | - | - | - | - | - | - | - | - | - | - | - | - |
| | Aminosilane | - | - | - | - | - | - | - | - | - | - | - | - |
| Performance Evaluation | Impregnation property | C | C | C | C | C | C | C | C | C | A | A | B |
| | Viscosity [mPa·s] | 290 | 250 | 235 | 210 | 355 | 420 | 470 | 250 | >1000 | 27 | 15 | 110 |
| | pH | 3.8 | 4.2 | 4.5 | 4.7 | 3.9 | 4.3 | 4.6 | 2.8 | 3.1 | 2.5 | 2.5 | 2.5 |
| | Full cure temperature [°C] | 205 | 195 | 188 | 192 | 208 | 196 | 190 | 193 | 202 | 182 | 196 | 192 |
| | Strength [MPa] | 10.3 | 12 | 12 | 9.9 | 16.6 | 14 | 12.5 | 19.4 | 9.8 | 8.8 | 4.6 | 10.5 |

## Claims

1. A binder comprising;
a carboxyl group-containing polymer having a weight average molecular weight of 2000 to 6000 g/mol and
a polyhydric alcohol,
wherein a molar ratio of a carboxylic acid group of the carboxyl group-containing polymer and the polyhydric alcohol is 79 : 21 to 35 : 65, and
wherein the polyhydric alcohol comprises a polyhydric alcohol having a viscosity of 900 mPa·s or less at 20 °C.

2. The binder according to claim 1, wherein the polyhydric alcohol comprises at least one compound selected from the group consisting of hydrocarbon compounds substituted with 2 to 10 hydroxyl groups and polyalkylene glycols.

3. A binder comprising;
a carboxyl group-containing polymer having a weight average molecular weight of 2000 to 6000 g/mol and
a polyhydric alcohol,
wherein a molar ratio of a carboxylic acid group of the carboxyl group-containing polymer and the polyhydric alcohol is 79 : 21 to 35 : 65, and
wherein the polyhydric alcohol comprises at least one compound selected from the group consisting of hydrocarbon compounds substituted with 2 to 10 hydroxyl groups and polyalkylene glycols.

4. The binder according to claim 3, wherein the hydrocarbon compound substituted with hydroxyl groups is at least one selected from the group consisting of ethylene glycol, propylene glycol, 1, 3-propanediol, 1, 3-butylene glycol, 1, 4-butanediol, 1, 5-pentanediol, 1, 6-hexanediol, glycerin, trimethylolpropane, trimethylolethane, erythritol, xylitol and sorbitol.

5. The binder according to any one of claims 1 to 4, wherein the carboxyl group-containing polymer contains a phosphorus element.

6. The binder of claim 5, wherein the carboxyl group-containing polymer comprises a residue derived from an oxoacid of phosphorus.

7. The binder according to any one of claims 1-6, further comprising a polyamine.

8. The binder according to any one of claims 1 to 7, further comprising a silane coupling agent.

9. The binder according to any one of claims 1 to 6, further comprising a polyamine and a silane coupling agent.

10. The binder according to any one of claims 1 to 9, having a viscosity of 200 mPa·s or less at 25 °C.

11. The binder according to any one of claims 1 to 10, being a binder for fibers.

12. A solidified body comprising a solidified product of the binder according to any one of claims 1 to 11 and a filler bonded by the solidified product.

13. A process for producing a solidified body comprising:
a step of obtaining a precursor by bringing a carboxyl group-containing polymer having a weight average molecular weight of 2000 to 6000 g/mol and a polyhydric alcohol into contact with a filler, wherein a molar ratio of a carboxylic acid group contained in the carboxyl group-containing polymer in the precursor to the polyhydric alcohol is 79 : 21 to 35 : 65, and
a step of solidifying the precursor,
wherein the polyhydric alcohol satisfies at least one of the following conditions (1) and (2).
(1) The polyhydric alcohol comprises a polyhydric alcohol having a viscosity of 900 mPa ·s or less at 20 °C.
(2) The polyhydric alcohol comprises at least one compound selected from the group consisting of hydrocarbon compounds substituted with 2 to 10 hydroxyl groups and polyalkylene glycols.

14. A solidified body formed by solidifying a precursor comprising a filler, and a carboxyl group-containing polymer having a weight average molecular weight of 2000 to 6000 g/mol and polyhydric alcohol being in contact with the a filler, wherein a molar ratio of a carboxylic acid group contained in the carboxyl group-containing polymer and the polyhydric alcohol in the precursor is 79 : 21 to 35 : 65, and wherein the polyhydric alcohol satisfies at least one of the following conditions (1) and (2).
(1) The polyhydric alcohol comprises a polyhydric alcohol having a viscosity of 900 mPa·s or less at 20 °C.
(2) The polyhydric alcohol comprises at least one compound selected from the group consisting of hydrocarbon compounds substituted with 2 to 10 hydroxyl groups and polyalkylene glycols.
